# FASCICULE DE BREVET EUROPEEN

(11) **EP 0 561 709 B1**
(45) Date de publication et mention de la délivrance du brevet: **15.05.1996**
(21) Numéro de dépôt: 93400701.4
(22) Date de dépôt: 18.03.1993
(51) Int. Cl.: A01B 15/14, A01B 73/00, A01B 3/46, B60D 1/50

(54) **Perfectionnement aux charrues multisocs**
Mehrschariger Pflug
Multifurrow plough

(30) Priorité: 20.03.1992 FR 9203555
(43) Date de publication de la demande: 22.09.1993
(73) Titulaire: CHARRUES NAUD S.A., F-49600 Andreze (FR)
(72) Inventeur: Naud, Bernard, F-49600 Andreze (FR)
(74) Mandataire: Phélip, Bruno

(56) Documents cités:
- EP-A- 0 297 969
- EP-A- 0 306 816
- WO-A-83/01887
- FR-A- 2 322 518
- FR-A- 2 623 686
- FR-A- 2 664 124
- US-A- 3 751 071

## Description

La présente invention concerne un perfectionnement aux charrues multisocs semi-portées qui travaillent sur une très grande largeur.

Ce type de charrue, multisocs, semi-portée, présente un encombrement important et, pour le transport notamment, il est nécessaire d'en réduire la largeur. Dans le cas d'une charrue de ce type qui, en plus, est réversible, il est également important de pouvoir recentrer le bâti sur l'axe longitudinal de retournement pour diminuer les efforts lors de la manoeuvre.

Il existe, tels que décrits dans les documents FR-A-2 322 518 et 2 664 124 et EP-A-297 969 montrant les caractéristiques du préambule de la revendication 1, des moyens qui permettent de recentrer le bâti de la charrue en le ramenant vers l'axe longitudinal c'est-à-dire l'axe autour duquel on effectue la manoeuvre de retournement.

Pendant l'opération de labour, ce type de charrue simplement tractée, se comporte comme une remorque dont les moindres réactions se ressentent au niveau du tracteur et influent sur sa conduite et sa stabilité par rapport à la direction d'avancement.

Ces réactions se manifestent de façon plus aigüe encore lorsque la largeur de la charrue est telle qu'elle permet d'effectuer ce que l'on appelle un labour hors raie c'est-à-dire un labour où le tracteur évolue sur le terrain non labouré.

Toutes ces réactions résultent de la position géométrique de la charrue par rapport au tracteur et des variations au niveau des efforts de labour.

Ces efforts dépendent de plusieurs facteurs. Ils changent par exemple, lorsque du fait des conditions de travail et/ou de la puissance du tracteur disponible, on fait évoluer par exemple, le nombre de corps de labour de la charrue.

Ils changent aussi, pendant l'opération de labour si la nature du terrain est variable ou si le travail s'effectue selon des lignes de niveau sur un terrain en pente.

Toutes ces variations engendrent donc des difficultés pour la conduite du tracteur et, de ce fait, se ressentent au niveau de la qualité du labour.

Pendant le transport ou pendant les manoeuvres, ces charrues demandent une attention particulière du fait qu'elles se comportent pratiquement comme de simples remorques. Lors des manoeuvres de braquage particulièrement court, il faut simplement veiller à éviter les interférences entre le premier corps de labour et le tracteur, et en particulier ses pneus. C'est pour cette raison que la charrue est assez éloignée du tracteur et que, en conséquence, en bout de champ, il reste une bande de terre non labourée relativement importante.

Dans le cas d'un labour "hors raie", le tracteur est généralement équipé de roues très larges ou même de roues jumelées, pour améliorer l'adhérence. Compte-tenu des problèmes d'interférences entre le premier corps et les roues du tracteur, on est obligé de positionner ce premier corps encore plus loin derrière le tracteur. Ceci a comme inconvénient d'accroître, en bout de champ, la largeur de la bande de terre non labourée.

La présente invention propose, d'une manière générale, des moyens pour apporter des solutions aux différentes contraintes et problèmes liés à l'utilisation des charrues multisocs semi-portées de grande largeur, et, plus particulièrement, des charrues pouvant effectuer selon les besoins un labour "hors raie".

La charrue selon l'invention est reliée au tracteur par un timon, et elle comporte un bras interposé entre les extrémités avant de ce timon et du bâti pour guider et positionner ce dernier par rapport audit timon ; elle comporte également des moyens pour déplacer, en continu l'extrémité arrière dudit timon le long dudit bâti et en particulier son ancrage sur ce dernier, pour régler la position du bâti par rapport au tracteur.

Ainsi on peut placer la résultante des efforts de labour dans l'alignement du plan médian du tracteur.

Selon un mode de réalisation, l'extrémité arrière du timon est articulée sur un coulisseau qui est guidé sur une glissière solidaire du bâti de la charrue.

La longueur de cette glissière pourra être relativement importante et être par exemple, supérieure à l'espace longitudinal entre deux corps consécutifs. On obtient ainsi une large plage de réglage du point d'ancrage du timon sur le bâti qui permet, en plus de la possibilité de compensation des réactions de la charrue durant le travail, de tenir compte du nombre de corps de la charrue.

Selon ce mode de réalisation de l'invention, la glissière est constituée de deux tiges parallèles disposées dans un même plan et solidaires du bâti.

Selon une autre disposition de l'invention, le coulisseau guidé par les tiges, est mobile sous l'effet d'un organe du type vérin, lequel vérin est ancré sur le bâti.

Toujours selon l'invention, le vérin est disposé entre le bâti et le coulisseau, de telle sorte qu'il puisse jouer un rôle d'amortisseur de traction lorsque la charrue est en position de travail, au moyen de sa plus grande chambre.

Selon une autre disposition de l'invention, la charrue comporte, de façon complémentaire, un timon réglable en longueur, du type télescopique, actionné par exemple au moyen d'un vérin.

On peut ainsi rapprocher le bâti pour positionner le premier corps à proximité du tracteur pendant le labour et l'éloigner lors des manoeuvres en bout de champ notamment.

Toujours selon l'invention, le bras disposé entre le timon et le bâti est un bras rigide articulé sur des axes fixes en tête de ces derniers ; la longueur de ce bras est en relation avec la course du timon télescopique et/ou celle du coulisseau sur la glissière du bâti d'une part, et de l'éloignement du bâti par rapport au timon d'autre part.

Ainsi, le bras rigide, le timon et le bâti forment un triangle dont les sommets sont matérialisés par les deux axes fixes d'articulation du bras rigide et l'-axe de traction à l'extrémité arrière du timon. La déformation de ce triangle du fait des variations de la longueur de ses côtés qui correspondent au timon et au bâti, permet le recentrage du bâti vers le timon. On réduit ainsi la largeur de la charrue, pour le transport notamment et, dans le cas d'une charrue réversible, on facilite l'opération de retournement.

Toujours selon l'invention, l'alimentation des différents vérins s'effectue au moyen de clapets pilotés de façon à permettre un verrouillage de leur position et éviter les à-coups dans le circuit hydraulique de commande.

Selon une autre disposition de l'invention, les vérins sont connectés à un amortisseur complémentaire du type boule d'azote.

L'invention sera encore illustrée à l'aide de la description suivante et des dessins annexés donnés à titre indicatif, et dans lesquels :
- la figure 1 représente, de façon schématique, la partie avant d'une charrue multicorps semi-portée en position normale de travail "hors raie" ;
- la figure 2 représente la même charrue avec le bâti en position recentrée ;
- la figure 3 représente le détail du système de glissière avec des sections partielles A, B, C et une coupe partielle 3-3 sur ladite figure 3.

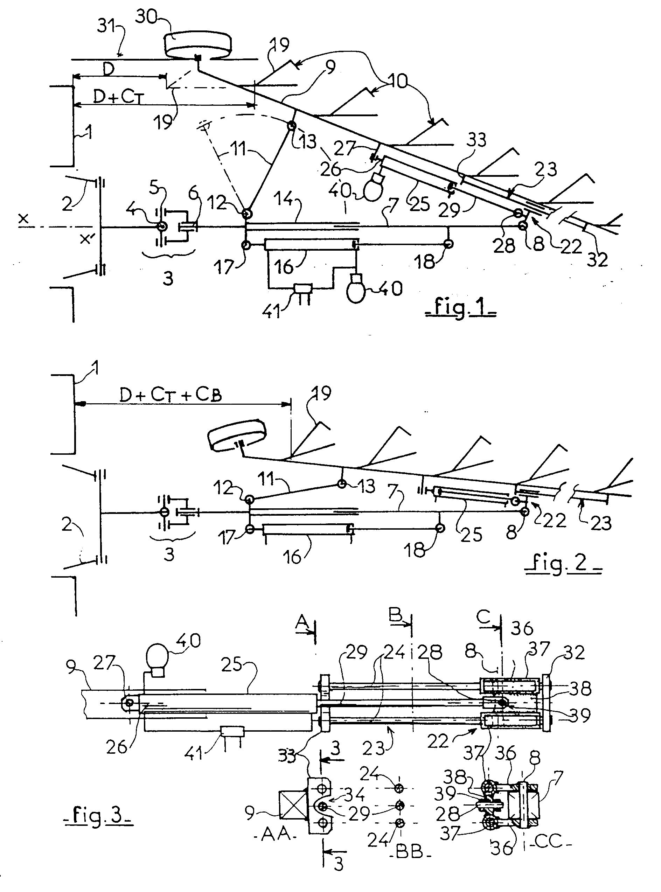

Les figures 1 et 2 présentent la partie avant d'une charrue du type semi-portée réversible. Cette partie avant se situe en avant d'un chariot, non représenté, du type de celui décrit notamment dans le document FR-A-2 623 686.

Cette charrue est reliée à un tracteur dont on aperçoit les roues 1, et en particulier au système de relevage 2 de ce tracteur, au moyen d'une tête d'attelage 3. Tel que représenté, on remarque au niveau de la tête d'attelage 3, un axe vertical 4 suivi d'un axe transversal horizontal 5 puis d'un axe 6 qui constitue l'axe de retournement dans le cas d'une charrue réversible, lequel axe 6 correspond à l'axe du timon 7. Les axes 4 et 5 forment une sorte de joint entre le tracteur et la charrue. Le mouvement de la charrue autour de l'axe 6 peut être commandé par un dispositif de retournement, non représenté, qui, dans ce cas, assujettit la position de la charrue à celle du tracteur. Cet axe 6 peut aussi être libre lorsque le dispositif de retournement se situe sur le chariot de la charrue comme représenté notamment dans le document FR-A-2 322 518.

Le timon 7 comporte un axe 8 à son extrémité arrière, qui est vertical lorsque la charrue est en position de travail. Cet axe 8 assure notamment la traction de la charrue lorsque celle-ci est en position de travail.

Cette charrue comporte un bâti 9 du type de celui décrit dans les documents précités. Ce bâti comporte une multitude de corps 10 qui sont selon le type de la charrue, simples ou réversibles. Le bâti 9 est tracté par le timon 7 ; l'axe de traction 8 est situé en arrière des premiers corps 10 du bâti, et, dans le cas de charrues du type de celles décrites dans les documents précités, il se situe en avant du chariot. Le bâti 9 est positionné par rapport au timon 7, au moyen d'un bras 11 qui est rigide et qui est articulé au niveau des parties avant du timon et du bâti, sur des axes fixes 12 et 13 respectivement. Ces axes 12 et 13 sont parallèles à l'axe 8.

Le bras 11 constitue également un support de la partie avant du bâti 9 ; il est proportionné en conséquence. Dans le cas d'une charrue du type de celle décrite dans le document FR-A-2 623 686 précité, le bras 11 assure, en coopération avec le timon 7, le retournement de la charrue.

Le timon 7, le bâti 9 et le bras 11 forment un triangle déformable dont les sommets correspondent aux axes d'articulation 8, 12 et 13. Cette déformation est obtenue par une modification de la longueur de l'un ou des deux côtés du triangle et en particulier des côtés correspondant au bâti 9 et au timon 7.

On peut réaliser une modification de la longueur du côté du triangle correspondant au timon 7, en utilisant un timon du type télescopique. Ce timon comporte par exemple une coulisse 14 à l'avant et un coulisseau 15 à l'arrière, manoeuvrés par un vérin 16 interposé entre les deux. Le vérin 16 est par exemple ancré à l'une de ses extrémités sur un axe 17 situé au niveau de l'articulation 12 et, à son autre extrémité, sur un axe 18 situé sur le coulisseau 15, vers l'axe d'articulation 8 qui est situé à l'extrémité arrière de ce coulisseau. Cette modification de la longueur du timon permet de modifier à volonté la position du premier corps 19 par rapport au tracteur. La plage de réglage peut être comprise entre 50 cm et 1 m par exemple.

La déformation du triangle 8, 12 et 13 peut également provenir d'une modification de la longueur du côté situé entre les axes 13 et 8, c'est-à-dire du côté qui correspond au bâti 9 de la charrue.

Le mouvement du bâti 9 par rapport au tracteur résulte alors d'un déplacement de l'organe de liaison aménagé entre l'extrémité arrière du timon, au niveau de l'axe 8, et ledit bâti 9. Cet organe de liaison consiste, figures 1 et 2, en un coulisseau 22 coopérant avec un système de glissière 23. Cette glissière 23 est constituée de deux tiges cylindriques 24, figure 3, solidaires du bâti 9 et parallèles entre elles et audit bâti. Le coulisseau 22, guidé sur les tiges 24, est solidaire de l'extrémité arrière du timon 7 et en particulier de l'axe 8. Le déplacement du coulisseau 22 sur la glissière 23, s'effectue au moyen d'un vérin 25 dont la partie arrière 26 du corps est solidaire du bâti 9 sur un axe 27, et dont l'extrémité 28 de la tige 29 dudit vérin est solidaire du coulisseau 22. La plage de réglage du coulisseau 22 est de préférence sensiblement supérieure à l'espacement entre deux corps consécutifs de la charrue. Elle est comprise entre 50 cm et 1 m par exemple.

On remarque, en comparant les figures 1 et 2, la position du bâti 9 par rapport au timon 7 lorsque les vérins 16 et 25 sont en extension, comme représenté figure 1, et lorsqu'ils sont rétractés, comme représenté figure 2.

Telle que représentée figure 1, la charrue effectue un travail dit "hors raie". Les roues 1 du tracteur roulent sur le sol non labouré. On remarque, à l'extrémité avant du bâti 9, une roue 30 qui roule dans la raie 31 laissée par le passage précédent de la charrue.

Figure 2, le bâti occupe une position différente, il est recentré vers le timon 7 et reculé par rapport au tracteur. Dans cette position, la charrue est plus facile à manoeuvrer, notamment s'il s'agit d'une charrue réversible avec laquelle on doit effectuer un retournement ; elle est également plus facile à transporter.

Le vérin 25 permet de modifier à volonté la position de l'axe de traction 8 situé à l'extrémité arrière du timon 7. On obtient ainsi un effet de compensation qui permet d'effectuer une traction en ligne et donc de rendre plus facile la conduite du tracteur. La résultante des efforts de labour se situe sur l'axe XX' du tracteur qui correspond à son axe longitudinal ou à son plan médian.

Généralement cette résultante se situe, sur la charrue, sensiblement à mi-largeur de la largeur de travail.

Dans sa position normale de travail, figure 1, on remarque que le corps 19 occupe une position rapprochée par rapport au tracteur, tandis que dans sa position transport, comme représentée figure 2, la distance totale qui sépare le premier corps 19 de la roue arrière 1 du tracteur correspond à la distance minimale D augmentée de la course du timon CT et de la course CB du coulisseau 12 sur le bâti 9.

Sur la figure 1, on remarque que le premier corps 19 est représenté en traits forts à une distance qui correspond à D plus CT lorsque seul le vérin 16 a été manoeuvré ; le premier corps 19, représenté en traits mixtes fins, se trouve à une distance D de la roue 1 du tracteur lorsque, de façon complémentaire, le vérin 16 a été actionné pour rétracter totalement le timon télescopique 7 ce qui a pour effet de positionner le bras Il comme représenté en traits mixtes fins, dans sa position la plus rapprochée du tracteur si les conditions de travail et la structure de la charrue le permettent.

La distance entre le premier corps 19 et la roue du tracteur, lors des manoeuvres, doit être au moins égale à la moitié de la voie du tracteur pour éviter toute interférence entre les corps de labour et les roues 1 dudit tracteur.

Pour le labour, cette distance D est avantageusement la plus courte possible pour réduire au maximum le guéret, c'est-à-dire la largeur de la bande non labourée en bout de parcelle.

On a représenté, figure 3, en détail, les moyens qui permettent de faire varier la position de l'ancrage du timon 7 sur le bâti 9 au niveau de l'axe 8. On remarque les tiges cylindriques 24 constituant la glissière 23. Ces tiges 24 sont disposées dans un même plan vertical lorsque la charrue est en position de travail, dans le même plan que celui du vérin 25. La tige 29 du vérin est située entre les deux tiges 24.

Les tiges 24 sont solidaires du bâti 9 au moyen d'une platine arrière 32 et d'une platine avant 33. La platine avant 33 comporte une échancrure 34 qui permet le passage de la tige 29 du vérin 25. Le vérin 25 est solidaire du bâti 9 au moyen de l'axe 27. C'est cet axe 27 qui assure l'entraînement du bâti 9 sous l'effet de la traction du timon 7, par l'intermédiaire du coulisseau 22 et du vérin 25.

Le coulisseau 22 est solidaire de l'extrémité arrière du timon 7 au moyen de l'axe 8. L'extrémité arrière du timon 7 est prise dans une chape 36. Cette chape 36 est solidaire des fourreaux 37 qui sont guidés sur les tiges 24. Ces deux fourreaux 37 sont reliés entre eux par une platine 38. Cette platine 38 est solidaire de l'extrémité 28 du vérin 25 au moyen d'un axe 39.

Les vérins 16 et 25 jouent également un rôle d'amortisseur entre le timon 7 et le bâti 9. On peut leur adjoindre un amortisseur complémentaire 40 du type boule d'azote.

Ces vérins 16 et 25 sont de préférence alimentés à travers un clapet 41 du type piloté qui permet de verrouiller leur position et par voie de conséquence la position de l'axe de traction 8 du timon 7 par rapport au bâti 9.

On peut également prévoir un automatisme qui permet, en bout de champ, de simplifier le travail de l'opérateur compte-tenu du fait que l'ensemble des mouvements du bâti provient de vérins hydrauliques qui sont manoeuvrés à volonté par cet opérateur, depuis le tracteur.

Les signes de référence insérés après les caractéristiques techniques mentionnées dans les revendications ont pour seul but de faciliter la compréhension de ces dernières et n'en limitent aucunement la portée.

## Revendications

1. Charrue multisocs semi-portée de grande largeur destinée à être attelée à un tracteur au moyen d'un timon (7), du type comportant un bras support (11) interposé entre les extrémités avant du timon (7) et du bâti (9) de la charrue pour guider et positionner ledit bâti par rapport au timon (7), caractérisée en ce que le bras support (11) est rigide et articulé au niveau des extrémités avant du timon (7) et du bâti autour d'axes fixes (12, 13), et, que la charrue comporte des moyens pour déplacer en continu, depuis le tracteur, l'extrémité arrière du timon (7) le long du bâti (9), et en particulier son point d'ancrage sur ce dernier, pour régler la position du bâti par rapport audit tracteur.

2. Charrue multisocs semi-portée selon la revendication 1, caractérisée en ce que l'extrémité arrière du timon est articulée au moyen d un axe (8) sur un coulisseau (22) qui est guidé sur une glissière (23) solidaire du bâti (9).

3. Charrue multisocs semi-portée selon la revendication 2, caractérisée en ce qu'elle comporte un vérin (25) interposé entre le bâti (9) et le coulisseau (22) pour faire varier la position de ce dernier par rapport au bâti (9).

4. Charrue multisocs semi-portée selon la revendication 3, caractérisée en ce que le vérin (25) est disposé de façon à jouer un rôle d'amortisseur de traction lorsque la charrue est en position de travail, au moyen de sa grande chambre dont l'extrémité (26) est solidaire du bâti (9).

5. Charrue multisocs semi-portée selon la revendication 2, caractérisée en ce que la glissière est constituée de deux tiges cylindriques (24) parallèles, disposées dans un même plan vertical lorsque la charrue est en position de travail, et solidaires du bâti (9) au moyen de deux platines (32, 33) situées aux extrémités desdites tiges.

6. Charrue multisocs semi-portée selon l'une quelconque des revendications 1 à 5, caractérisée en ce qu'elle comporte un timon (7) du type télescopique commandé par un vérin (16).

7. Charrue multisocs semi-portée selon la revendication 6, caractérisée en ce que le bras (11) est un bras rigide articulé autour d'axes fixes (12 et 13) en tête du timon (7) et du bâti (9) respectivement, et en ce que la longueur de ce bras (11) est en relation avec la course du timon (7) et/ou celle de la glissière (23) d'une part, et de l'éloignement du bâti (9) par rapport au timon (7) d'autre part.

8. Charrue multisocs semi-portée selon l'une quelconque des revendications 1 à 7, caractérisée en ce que l'alimentation des vérins (16 et 25) s'effectue au moyen de clapets (41) du type pilotés pour permettre un verrouillage de la position de la tige desdits vérins.

9. Charrue multisocs semi-portée selon la revendication 8, caractérisée en ce qu'elle comporte un amortisseur complémentaire (40) du type boule d'azote, positionné sur les vérins (16 et 25).

## Claims

1. A very wide semi-supported multifurrow plough designed for coupling to a tractor using a beam (7) of the type containing a supporting arm (11) interposed between the front ends of the beam (7) and of the frame (9) of the plough in order to guide and position the said frame with respect to the beam (7) characterised in that the supporting arm (11) is rigid and articulated at the level of the front ends of the beam (7) and of the frame around fixed axles (12, 13), in that the plough exhibits means for the continuous displacement, from the tractor, of the rear end of the beam (7) along the frame (9), and especially its anchoring point on the latter, in order to adjust the position of the frame with respect to the said tractor.

2. A semi-supported multifurrow plough according to claim 1, characterised in that the rear end of the beam is articulated using an axle (8) over a slide (22) which is guided over a rail (23) connected rigidly to the frame (9).

3. A semi-supported multifurrow plough according to claim 2, characterised in that it contains a jack (25) interposed between the frame (9) and the slide (22) in order to change the position of the latter with respect to the frame (9).

4. A semi-supported multifurrow plough according to claim 3, characterised in that the jack (25) is designed in order to play a traction damping role when the plough is in working position, using its greater chamber whose end (26) is connected rigidly to the frame (9).

5. A semi-supported multifurrow plough according to claim 2, characterised in that the slide is made of two cylindrical rods (24) parallel, arranged in the same vertical plane when the plough is in working position and connected rigidly to the frame (9) using two plates (32, 33) located at the ends of the said rods.

6. A semi-supported multifurrow plough according to any of claims 1 to 5, characterised in that it comprises a telescopic-type beam (7), operated by a jack (16).

7. A semi-supported multifurrow plough according to claim 6, characterised in that the arm (11) is a rigid arm articulated around fixed axles (12 and 13) at the front section of the beam (7) and of the frame (9) respectively, and that the length of this arm (11) is proportional to the stroke of the beam (7) and/or that to the rail (23) on the one hand, and of the distance of the frame (9) with respect to the beam (7) on the other.

8. A semi-supported multifurrow plough according to any of claims 1 to 7, characterised in that the supply of the jacks (16 and 25) is carried out by operated flaps (41) which allow locking the position of the rod of the said jacks.

9. A semi-supported multifurrow plough according to claim 8, characterised in that it contains an additional damper (40), of the nitrogen ball type, positioned onto the jacks (16 and 25).

## Patentansprüche

1. Aufgesattelter, mehrschariger Pflug von großer Breite, der so ausgebildet ist, daß er mittels Pflugbaum (7) an eine Zugmaschine ankoppelbar ist, wobei dieser einen zwischen den Vorderenden des Pflugbaumes (7) und des Tragrahmens (9) des Pfluges eingesetzten Stützarm (11) aufweist, um den Tragrahmen in bezug auf den Pflugbaum (7) zu führen und zu positionieren, dadurch gekennzeichnet, daß der Stützarm (11) starr und an den Vorderenden des Pflugbaumes (7) und des Tragrahmens um feststehende Achsen (12, 13) drehbar ist, und daß der Pflug Mittel zum von der Zugmaschine aus stufenlosen Verlagern des Hinterendes des Pflugbaumes (7) längs dem Tragrahmen (9), und insbesondere seines Aufhängepunktes auf letzterem, umfaßt, um die Position des Tragrahmens gegenüber der der Zugmaschine einzustellen.

2. Aufgesattelter, mehrschariger Pflug nach Anspruch 1, dadurch gekennzeichnet, daß das Hinterende des Pflugbaumes mittels einer Achse (8) auf einem Gleitstück (22) angelenkt ist, das auf einer mit dem Tragrahmen (9) fest verbundenen Gleitschiene (23) geführt ist.

3. Aufgesattelter, mehrschariger Pflug nach Anspruch 2, dadurch gekennzeichnet, daß dieser ein zwischen dem Tragrahmen (9) und dem Gleitstück (22) eingefügtes Stellglied (25) umfaßt, um die Position des Gleitstücks gegenüber dem Tragrahmen (9) zu verändern.

4. Aufgesattelter, mehrschariger Pflug nach Anspruch 3, dadurch gekennzeichnet, daß das Stellglied (25) so angeordnet ist, daß es mittels seiner großen Kammer, deren Ende (26) mit dem Tragrahmen (9) fest verbunden ist, die Funktion eines Zugdämpfers übernimmt, wenn sich der Pflug in einer Arbeitsposition befindet.

5. Aufgesattelter, mehrschariger Pflug nach Anspruch 2, dadurch gekennzeichnet, daß die Gleitschiene aus zwei Zylinderstangen (24) gebildet ist, die mittels zweier Platten (32, 33), die an den Enden der Stangen angeordnet sind, parallel zu, und zwar angeordnet in derselben vertikalen Ebene, wenn sich der Pflug in Arbeitsposition befindet, und fest verbunden mit dem Tragrahmen (9) sind.

6. Aufgesattelter, mehrschariger Pflug nach einem der Ansprüche 1-5, dadurch gekennzeichnet, daß dieser einen durch ein Stellglied (16) gesteuerten teleskopartigen Pflugbaum (7) umfaßt.

7. Aufgesattelter, mehrschariger Pflug nach Anspruch 6, dadurch gekennzeichnet, daß der Arm (11) ein starrer Arm ist, der am Kopf des Pflugbaumes (7) bzw. des Tragrahmens (9) jeweils um eine feststehende Achse (12 und 13) drehbar ist, und daß die Länge dieses Armes (11) einerseits abhängig ist von dem Lauf des Pflugbaumes (7) und/oder von dem der Cleitschiene (23) und andererseits von der Entfernung des Tragrahmens (9) gegenüber dem Pflugbaum (7).

8. Aufgesattelter, mehrschariger Pflug nach einem der Ansprüche 1-7, dadurch gekennzeichnet, daß die Beschickung der Stellglieder (16 und 25) mittels ferngesteuerter Verschlußklappen (41) ausgeführt wird, um eine Verriegelung der Position der Stange der Stellglieder zu gestatten.

9. Aufgesattelter, mehrschariger Pflug nach Anspruch 8, dadurch gekennzeichnet, daß dieser ein ergänzendes Dämpfungselement (40) in Art einer Stickstoffkugel umfaßt, das über den Stellgliedern (16 und 25) angeordnet ist.
